# EUROPEAN PATENT APPLICATION

(11) **EP 4 621 483 A1**
(43) Date of publication of application: **24.09.2025**
(21) Application number: 23906437.1
(22) Date of filing: 13.10.2023
(51) Int. Cl.: G03B 21/00, G03B 21/14, G02F 1/133, G02F 1/1333, G02F 1/1335, G02F 1/13357

(54) **PROJECTION DISPLAY DEVICE**

(30) Priority: 20.12.2022 JP 2022203400
(71) Applicant: JVCKenwood Corporation, Yokohama-shi, Kanagawa 2210022 (JP)
(72) Inventor: MAENO, Keiichi, Yokohama-shi, Kanagawa 221-0022 (JP); FURUKAWA, Tadashi, Yokohama-shi, Kanagawa 221-0022 (JP)
(74) Representative: Carstens, Dirk Wilhelm
(86) International application number: PCT/JP2023/037176
(87) International publication number: WO 2024/135062

(57) **Abstract**

A projection display device that enables adequate reduction of generation of fringes is to be provided. A projection display device (100) according to an embodiment includes: a light source (101) that emits light in a blue wavelength range; a first display element (106R), a second display element (106G), and a third display element (106B) that are respectively arranged correspondingly to red, green, and blue and generate image light corresponding to each color; a heater (161) arranged, via a heat sink (160), on at least a back surface of the third display element (106B) corresponding to blue; and a temperature sensor (162) provided on the heat sink (160); the light source (101) has a group of plural blue laser light sources having different oscillation wavelengths; and the projection display device (100) includes a heater control unit (23) that causes the heater (161) to operate in a case where a temperature detected by the temperature sensor (162) is lower than a predetermined first temperature.

## Description

### Field

The present disclosure relates to projection display devices using liquid crystal display elements. Background

Projection display devices using reflective liquid crystal display elements have been known generally (see, for example, Patent Literature 1). Projection display devices of this kind, for example, generate white light by irradiating a fluorescent body with blue laser light from a light source including a single wavelength blue laser, separate this white light into blue light and green light, and thereafter project an enlarged image onto a screen, the enlarged image having the blue light and green light each modulated by a reflective liquid crystal display element.

### Citation List

### Patent Literature

Patent Literature 1: Japanese Unexamined Patent Application Publication No. 2005-227485

### Summary

### Technical Problem

In conventional projection display devices, temperatures of their liquid crystal display elements at the start of use are generally lower than temperatures adequate for their operation. Therefore, temperature distributions in the liquid crystal display elements are not uniform until temperatures of the liquid crystal display elements are heated up to the adequate temperatures. As a result, fringes (interference fringes) split into bright regions and dark regions may be generated at the start of use for a single wavelength light source like a laser and there is thus a demand for a projection display device that enables adequate reduction of this generation of fringes.

In view of the above described problem, an object of the present disclosure is to provide a projection display device that enables adequate reduction of generation of fringes.

### Solution to Problem

A projection display device according to the present disclosure, including: a light source that emits light in a blue wavelength range; liquid crystal display elements that are respectively arranged correspondingly to red, green, and blue, and generate image light corresponding to each color; a heating unit arranged, via a heat sink, on at least a back surface of the liquid crystal display element corresponding to blue; and a first temperature sensor provided on the heat sink, wherein
the light source has a group of plural blue lasers having different oscillation wavelengths, and the projection display device includes a heater control unit that causes the heating unit to operate in a case where a temperature detected by the first temperature sensor is lower than a predetermined first temperature.

### Advantageous Effects of Invention

According to an embodiment, a liquid crystal display element is heated up by operation of a heating unit and generation of fringes is thus able to be reduced adequately.

### Brief Description of Drawings

FIG. 1 is a schematic diagram of a display device according to an embodiment.
FIG. 2 is a schematic block diagram of a control unit according to the embodiment.
FIG. 3 is a flowchart illustrating a procedure of operation by the control unit according to the embodiment.
FIG. 4 is a flowchart illustrating a procedure of operation at a step of obtaining temperature data in FIG. 3.
FIG. 5 is a diagram illustrating an example of how element temperature changes over environmental temperature. Description of Embodiments

An embodiment of the present disclosure will be described hereinafter in detail, on the basis of the drawings. The present invention is not to be limited by the embodiment described hereinafter.

### Configuration of Projection Display Device

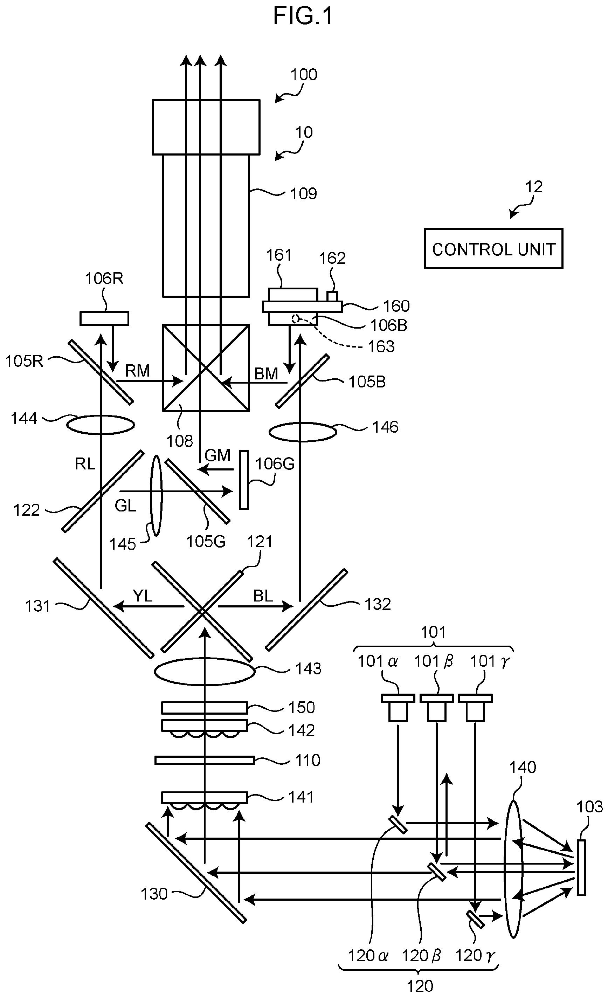

FIG. 1 is a schematic diagram of a projection display device according to an embodiment. The projection display device is a display device that generates white light by irradiating a fluorescent body with visible light (for example, blue laser light), separates this white light into red light, blue light, and green light, and thereafter displays an image obtained by modulation of each of the red light, blue light, and green light and combining the modulated red light, blue light, and green light. As illustrated in FIG. 1, a projection display device 100 according to the embodiment includes a display mechanism 10 and a control unit 12. The display mechanism 10 includes a light source 101, a fluorescent body 103, polarizing plates 105R, 105G, and 105B, a first display element 106R, a second display element 106G, a third display element (a liquid crystal display element corresponding to blue) 106B, a color combination prism 108, a projection lens 109, a λ/4 plate 110, dichroic mirrors 120 to 122, reflective mirrors 130 to 132, lenses 140 to 146, and a polarization conversion element 150. The first display element 106R, the second display element 106G, and the third display element 106B are, for example, reflective liquid crystal display elements each having a configuration with a liquid crystal layer interposed between a silicon substrate and a glass substrate, the reflective liquid crystal display elements being provided correspondingly to respective colors described later.

The dichroic mirrors 120 to 122 each have a property of separating light incident thereon by reflection and transmission, with a separation wavelength serving as a separation boundary. The dichroic mirrors 120 to 122 are each able to be manufactured by forming, for example, a dielectric multilayer film in a predetermined region of a transparent material, such as a glass plate or a prism. Their optical properties are able to be set according to materials and film thicknesses of dielectric substances composing the dielectric multilayer films.

The light source 101 emits illumination light that is light in a wavelength range of visible light. In this embodiment, the light source 101 is a blue laser light source including a blue laser element, and emits, for example, blue illumination light in a wavelength range of 450 nm or more and 495 nm or less.

In this embodiment, the light source 101 has a first blue laser light source 101α, a second blue laser light source 101β, and a third blue laser light source 101γ of a group of three (plural) different oscillation wavelengths. The oscillation wavelengths of these first blue laser light source 101α to third blue laser light source 101γ in the group have been set to be different from each other by at least 10 nm or more. Specifically, the oscillation wavelength of the first blue laser light source 101α has been set to 445 nm, the oscillation wavelength of the second blue laser light source 101β has been set to 455 nm, and the oscillation wavelength of the third blue laser light source 101γ has been set to 465 nm.

Generally, in a case where a blue laser light source of a short wavelength is used as a single wavelength light source, fringes (interference fringes) split into bright regions and dark regions may be generated due to unevenness of thickness (cell thickness) of a liquid crystal display element and these fringes may be superposed on an image to be displayed. Therefore, thickness of the liquid crystal display element needs to be controlled strictly. By contrast, the configuration according to this embodiment, as described above, has the first blue laser light source 101α to the third blue laser light source 101γ in the group of three having the oscillation wavelengths different from each other by at least 10 nm or more, and fringes in a blue image, in particular, are thus reduced by changes in intervals between the fringes and in positions of peaks and bottoms due to the differences between the oscillation wavelengths. Requirements for controlling the thickness of the liquid crystal display element are thereby able to be eased.

The above mentioned oscillation wavelengths of the first blue laser light source 101α to the third blue laser light source 101γ are just examples and may be modified as appropriate as far as the oscillation wavelengths are included in the blue wavelength range. Furthermore, differences between the oscillation wavelengths of the blue laser light sources may be modified as appropriate to be in a range of, for example, 10 nm or more and 20 nm or less. In addition, the number of the blue laser light sources in the group is not necessarily three as long as the number of the blue laser light sources in the group is plural.

The blue illumination light from the light source 101 is emitted to the dichroic mirror 120. The dichroic mirror 120 has a property of reflecting blue illumination light and transmitting yellow illumination light therethrough. In this embodiment, the dichroic mirror 120 includes dichroic mirrors 120α, 120β, and 120γ that have been arranged correspondingly to the above described first blue laser light source 101α to third blue laser light source 101γ.

Blue illumination light emitted from the respective first blue laser light source 101α to third blue laser light source 101γ is reflected by the respective dichroic mirrors 120α to 120γ, is further condensed by the lens 140, and then illuminates the fluorescent body 103. The fluorescent body 103 has a fluorescent layer and a reflection plane. The fluorescent layer generates yellow illumination light including a red band component and a green band component having intensities corresponding to energy intensities of the blue illumination light emitted from the first blue laser light source 101α to the third blue laser light source 101γ. The reflection plane reflects the blue illumination light that has been transmitted through the fluorescent layer and the yellow illumination light generated by the fluorescent layer.

The dichroic mirrors 120α, 120β, and 120γ have each been formed to have an area smaller than a luminous flux width of reflected light (diffused light) from the fluorescent body 103. Furthermore, these dichroic mirrors 120α to 120γ have each been oriented such that a polarization direction of laser light with respect to the dichroic mirror 120α, 120β, or 120γ is of s-polarization. Therefore, the dichroic mirrors 120α to 120γ each have a property of reflecting s-polarized light of the blue illumination light incident on the dichroic mirror 120α, 120β, or 120γ and transmitting p-polarized light of that blue illumination light therethrough, and transmitting the yellow illumination light therethrough regardless of its polarization direction.

Therefore, the yellow illumination light (fluorescent light) that has been subjected to wavelength excitation by the fluorescent body 103, the yellow illumination light including the red component and the green component, is mixed with the blue illumination light, which is not fluorescent, and the mixed yellow illumination light and blue illumination light enter the dichroic mirrors 120α to 120γ again. The yellow illumination light that is fluorescent light and includes the red component and the green component is transmitted and output wholly through the dichroic mirrors 120α to 120γ. However, the blue illumination light becomes randomly polarized light having plural kinds of polarizations when the blue illumination light is reflected (diffused) by the fluorescent body 103. Therefore, p-polarization components of components of the blue illumination light falling on the dichroic mirrors 120α, 120β, and 120γ are transmitted and output through the dichroic mirrors 120α, 120β, and 120γ, but s-polarization components of the components are reflected by the dichroic mirrors 120α, 120β, and 120γ and returned to the first blue laser light sources 101α, 101β, and 101γ.

The blue illumination light and the yellow illumination light that have been transmitted through the dichroic mirrors 120α, 120β, and 120γ are reflected by the reflective mirror 130 and enter the lens 141. The lens 141 and the lens 142 are, for example, fly's eye lenses, and the λ/4 plate 110 has been arranged between these lenses 141 and 142. Illumination distributions of the blue illumination light and yellow illumination light reflected by the reflective mirror 130 are uniformized by the lens 141, the λ/4 plate 110, and the lens 142 and the blue illumination light and yellow illumination light are then input to the polarization conversion element 150. The polarization conversion element 150 has, for example, a polarization beam splitter and a phase difference plate. The polarization beam splitter reflects any one of s-polarized light and p-polarized light and transmits the other one of the s-polarized light and p-polarized light therethrough. In the example of FIG. 1, the polarization beam splitter reflects s-polarized light and transmits p-polarized light therethrough. Furthermore, the phase difference plate converts any one of s-polarized light and p-polarized light into the other one of the s-polarized light and p-polarized light. In the example of FIG. 1, the phase difference plate converts s-polarized light into p-polarized light. Each illumination light is aligned to be p-polarized by the polarization conversion element 150.

Each illumination light aligned to be p-polarized by the polarization conversion element 150 illuminates the dichroic mirror 121 via the lens 143. The lens 143 is, for example, a condenser lens.

The dichroic mirror 121 separates blue illumination light BL and yellow illumination light YL incident thereon. The yellow illumination light YL separated by the dichroic mirror 121 is reflected by the reflective mirror 131 and becomes incident on the dichroic mirror 122.

The dichroic mirror 122 separates the yellow illumination light YL incident thereon into red illumination light RL including a red band component and green illumination light GL including a green band component, with a wavelength serving as a separation boundary, the wavelength being intermediate between a red light band and a green light band. Specifically, the dichroic mirror 122 reflects the green band component of the yellow illumination light YL incident thereon and outputs green illumination light GL and transmits therethrough the red band component of the yellow illumination light YL incident thereon and outputs red illumination light RL. The red illumination light RL is, for example, light in a wavelength range of 620 nm or more and 750 nm or less, and the green illumination light GL is, for example, light in a wavelength range of 495 nm or more and 570 nm or less.

The red illumination light RL separated by the dichroic mirror 122 illuminates the polarizing plate 105R via the lens 144. The green illumination light GL separated by the dichroic mirror 122 illuminates the polarizing plate 105G via the lens 145. The blue illumination light BL separated by the dichroic mirror 121 is reflected by the reflective mirror 132 and illuminates the polarizing plate 105B via the lens 146.

The polarizing plates 105R, 105G, and 105B each have a property of reflecting any one of s-polarized light and p-polarized light and transmitting the other one of the s-polarized light and p-polarized light therethrough. The example in FIG. 1 illustrates a state where the polarizing plates 105R, 105G, and 105B reflect s-polarized light and transmit p-polarized light therethrough. The polarizing plates 105R, 105G, and 105B are also referred to as reflective polarizing plates. The polarizing plates 105R, 105G, and 105B are, for example, wire grid polarizing plates.

The red illumination light RL, which is p-polarized light, is transmitted through the polarizing plate 105R and illuminates the first display element 106R. The green illumination light GL, which is p-polarized light, is transmitted through the polarizing plate 105G and illuminates the second display element 106G. The blue illumination light BL, which is p-polarized light, is transmitted through the polarizing plate 105B and illuminates the third display element 106B.

On the basis of image data on a red component, the first display element 106R optically modulates the p-polarized red illumination light RL and generates s-polarized red image light **RM.** On the basis of image data on a green component, the second display element 106G optically modulates the p-polarized green illumination light GL and generates s-polarized green image light GM. On the basis of image data on a blue component, the third display element 106B optically modulates the p-polarized blue illumination light BL and generates s-polarized blue image light BM. That is, the first display element 106R functions as an optical modulator for a red image, the second display element 106G functions as an optical modulator for a green image, and the third display element 106B functions as an optical modulator for a blue image.

The s-polarized red image light RM generated by the first display element 106R is reflected by the polarizing plate 105R and illuminates the color combination prism 108. The s-polarized green image light GM generated by the second display element 106G is reflected by the polarizing plate 105G and illuminates the color combination prism 108. The s-polarized blue image light BM generated by the third display element 106B is reflected by the polarizing plate 105B and illuminates the color combination prism 108.

The color combination prism 108 reflects the red image light RM and the blue image light BM, transmits the green image light GM therethrough, and causes each of the reflected red image light RM and blue image light BM and the transmitted green image light GM to illuminate the projection lens 109.

The red image light RM, the green image light GM, and the blue image light BM are projected onto a screen not illustrated in the drawings, for example, via the projection lens 109. A visible light image is displayed by means of the red image light RM, the green image light GM, and the blue image light BM.

In this embodiment, the display mechanism 10 includes, as the light source 101, the first blue laser light source 101α to the third blue laser light source 101γ of the group of three having oscillation wavelengths different from each other by at least 10 nm or more. Therefore, these differences between the oscillation wavelengths of the first blue laser light source 101α to the third blue laser light source 101γ reduce generation of fringes.

However, in a projection display device using a reflective liquid crystal display element of this kind, fringes (interference fringes) split into bright regions and dark regions may be generated at the start of use. The liquid crystal display element at the start of use is generally at a temperature lower than a temperature adequate for operation and the temperature distribution in the liquid crystal display elements is thus not uniform until the temperature of the liquid crystal display element warms up to the adequate temperature. As a result, there is a demand for reduction in generation of fringes at the start of use, for example, even in a case where plural laser light sources having different oscillation wavelengths are used. In particular, fringes tend to be generated in blue image light BM in a configuration using a blue laser light source as a light source.

In this embodiment, as illustrated in FIG. **1****,** the display mechanism 10 includes: a heater (heating unit) 161 arranged, via a heat sink 160, on a back surface (a surface opposite to that illuminated with the blue illumination light BL) of the third display element 106B corresponding to blue; and a temperature sensor (first temperature sensor) 162 provided on a heat sink 160. The heat sink 160 is a plate-like member that is formed of a metal high in heat conductivity, such as aluminum, and that has a certain thickness. The heat sink 160 is formed more largely than the back surface of the third display element 106B and the whole back surface of the third display element 106B is in contact with the heat sink 160.

The heater 161 heats the third display element 106B via the heat sink 160, and a plate-like ceramic heater may be used as the heater 161, for example. By being arranged on the heat sink 160, the heater 161 is capable of heating the whole heat sink 160 and is thus capable of heating the third display element 106B uniformly. The temperature sensor 162 has been mounted on the heat sink 160 and is capable of indirectly detecting a temperature of the third display element 106B by measuring a temperature of the heat sink 160.

Furthermore, the third display element 106B includes a bandgap temperature sensor (second temperature sensor) 163 in its element circuit. The bandgap temperature sensor 163 is, for example, a semiconductor temperature sensor that measures a temperature on the basis of voltage values at both ends of a diode in an electric circuit including the diode. This bandgap temperature sensor 163 has been provided in the element circuit of the third display element 106B and is thus capable of directly and accurately measuring the temperature of the third display element 106B. However, the bandgap temperature sensor 163 is not capable of measuring a temperature unless power is supplied to the third display element 106B. Therefore, in this embodiment, detection data from the above described temperature sensor 162 is used in a case where power is not being supplied to the third display element 106B, for example, at the start of use of the projection display device 100. A configuration including a heat sink 160, a heater 161, a temperature sensor (first temperature sensor) 162, and a bandgap temperature sensor (second temperature sensor) 163 on not only the third display element 106B corresponding to blue, but also each of back surfaces of the first display element 106R and second display element 106G corresponding to red and green may be adopted.

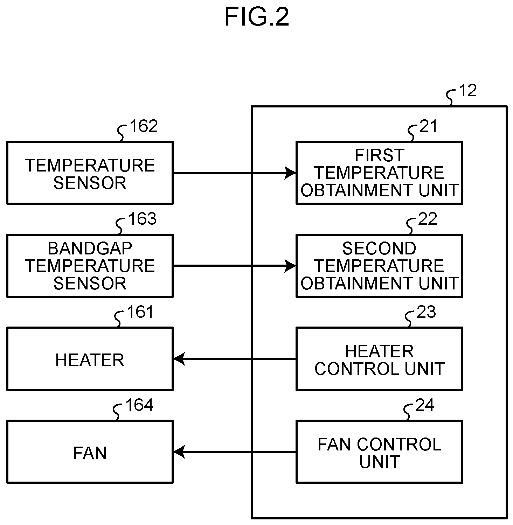

The control unit 12 will be described next. FIG. 2 is a schematic block diagram of a control unit according to the embodiment. The control unit 12 includes, as illustrated in FIG. 2, a first temperature obtainment unit 21, a second temperature obtainment unit 22, a heater control unit 23, and a fan control unit 24. The heater control unit 23 and the fan control unit 24 may be composed of an integrated circuit, which is hardware; or may be composed of a central processing unit (CPU), which is an arithmetic unit of a computer, and a memory, and configured so that a computer program (software) stored in the memory is executed by the CPU. With respect to this embodiment, part related to control of operation of the heater 161 will be described, and description of the rest will be omitted.

The first temperature obtainment unit 21 obtains temperature data detected by the temperature sensor 162. In this embodiment, unlike the bandgap temperature sensor 163, the temperature sensor 162 is capable of detecting a temperature of the third display element 106B regardless of whether or not power is supplied to the third display element 106B. The first temperature obtainment unit 21 outputs the temperature data obtained, to the heater control unit 23 and the fan control unit 24.

The second temperature obtainment unit 22 obtains temperature data detected by the bandgap temperature sensor 163. The second temperature obtainment unit 22 outputs the temperature data obtained, to the heater control unit 23 and the fan control unit 24. In a case where no temperature data has been input from the bandgap temperature sensor 163, the second temperature obtainment unit 22 may determine that power is not being supplied to the third display element 106B and output this determination result to the heater control unit 23 and the fan control unit 24.

On the basis of the temperature data input from the first temperature obtainment unit 21 or the second temperature obtainment unit 22, the heater control unit 23 controls operation of the heater 161. In this embodiment, in a case where the temperature data has been input from only the first temperature obtainment unit 21, the heater control unit 23 controls the operation of the heater 161 on the basis of the temperature data input. Furthermore, in a case where the temperature data has been input from each of the first temperature obtainment unit 21 and the second temperature obtainment unit 22, the heater control unit 23 prioritizes the temperature data input from the second temperature obtainment unit 22 and controls the operation of the heater 161 on the basis of the prioritized temperature data. That is, when power is not being supplied to the third display element 106B, the heater control unit 23 uses the detection data from the temperature sensor 162 and after power has been supplied to the third display element 106B, the heater control unit 23 uses the detection data from the bandgap temperature sensor 163 instead of the temperature sensor 162. This configuration enables the temperature data to be used, the temperature data resulting from direct and accurate measurement of the temperature of the third display element 106B.

In a case where the temperature data input from the first temperature obtainment unit 21 or the second temperature obtainment unit 22 is lower than a predetermined first temperature, the heater control unit 23 performs control to turn on (cause operation of) the heater 161. This first temperature has been set to a temperature lower than a temperature range adequate for operation of the third display element 106B. This control actuates the heater 161, and the third display element 106B is thus heated uniformly to a temperature adequate for the operation via the heat sink 160. Furthermore, in response to the temperature data reaching a second temperature higher than the first temperature, the temperature data having been input from the first temperature obtainment unit 21 or the second temperature obtainment unit 22, the heater control unit 23 performs control to turn off (stop) the heater 161. This second temperature has been set to a temperature included in the temperature range adequate for the operation of the third display element 106B. In this configuration, the third display element 106B has been heated sufficiently to the temperature range adequate for the operation and the heater 161 is thus turned off to avoid excessive heating.

On the basis of the temperature data input from the first temperature obtainment unit 21 or the second temperature obtainment unit 22, the fan control unit 24 controls operation of a fan 164. This fan 164 is, for example, an exhaust fan that is provided in a housing (not illustrated in the drawings) accommodating the display mechanism 10 and that is for taking the outside air into the housing and cooling the display mechanism 10 (in particular, the third display element 106B) by exhausting the air in the housing. Similarly to the heater control unit 23 described above, when power is not being supplied to the third display element 106B, the fan control unit 24 uses the detection data from the temperature sensor 162, and after power has been supplied to the third display element 106B, the fan control unit 24 uses the detection data from the bandgap temperature sensor 163 instead of the temperature sensor 162.

In response to the temperature data reaching the second temperature higher than the first temperature, the temperature data having been input from the first temperature obtainment unit 21 or the second temperature obtainment unit 22, the fan control unit 24 performs control to cause the fan 164 to operate. The temperature of the third display element 106B is thereby able to be prevented from rising excessively. In this embodiment, the configuration having the fan 164 caused to operate in response to the temperature reaching the second temperature, at which the heater 161 is to be turned off, is adopted, but the temperature, at which the fan 164 is caused to operate, may be modified as appropriate.

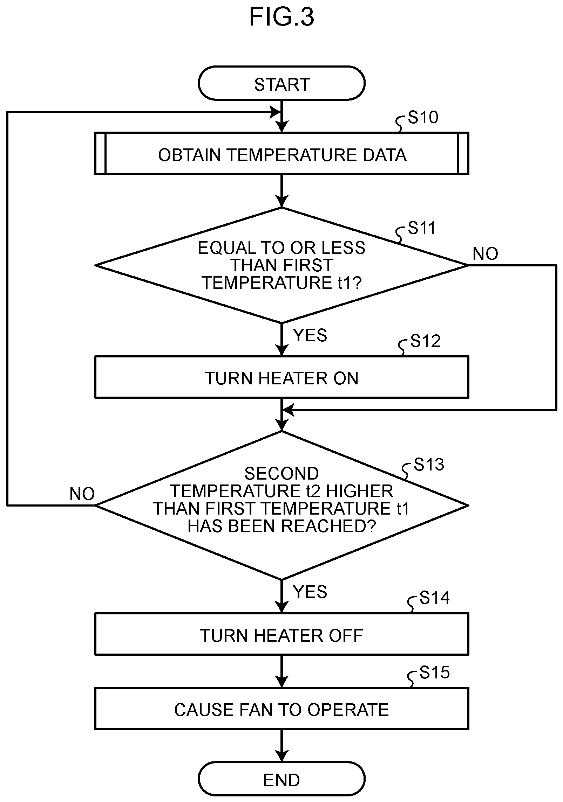

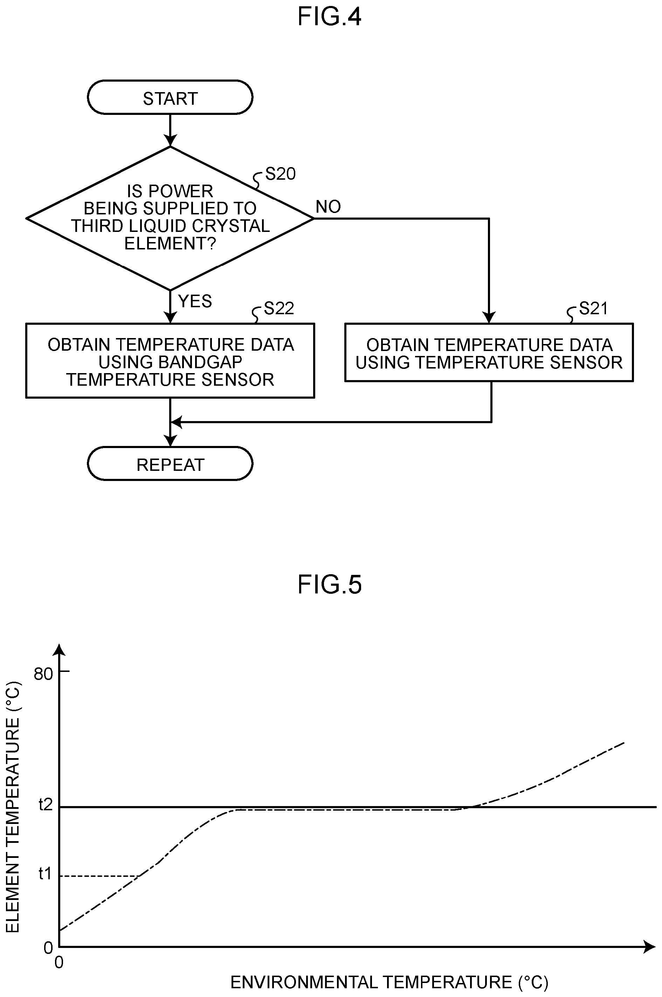

Control operation for a heater at the control unit will be described next. FIG. 3 is a flowchart illustrating a procedure of operation by the control unit according to the embodiment. FIG. 4 is a flowchart illustrating a procedure of operation at a step of obtaining temperature data in FIG. **3****.** FIG. 5 is a diagram illustrating an example of how element temperature changes over environmental temperature.

As illustrated in FIG. 3, the control unit 12 obtains temperature data on the third display element 106B (Step S10). Specifically, the control unit 12 obtains temperature data on the third display element 106B by means of the first temperature obtainment unit 21 or the second temperature obtainment unit 22. In obtaining the temperature data, as illustrated in FIG. 4, the control unit 12 determines, by means of the second temperature obtainment unit 22, whether or not power is being supplied to the third display element 106B (Step S20). In this embodiment, the second temperature obtainment unit 22 of the control unit 12 determines whether or not any temperature data has been input from the bandgap temperature sensor 163, and in a case where no temperature data has been input from the bandgap temperature sensor 163, the second temperature obtainment unit 22 determines that power is not being supplied to the third display element 106B. The second temperature obtainment unit 22 preferably outputs a determination result indicating that power is not being supplied to the third display element 106B, to the heater control unit 23 and the fan control unit 24. A means for determining whether or not power is being supplied may of course be provided separately.

In this determination, in a case where power is not being supplied to the third display element 106B (Step S20; No), the control unit 12 obtains, by means of the first temperature obtainment unit 21, temperature data on the third display element 106B, the temperature data having been detected by the temperature sensor 162 (Step S21). Furthermore, in this determination, in a case where power is being supplied to the third display element 106B (Step S20; Yes), the control unit 12 obtains, by means of the second temperature obtainment unit 22, temperature data on the third display element 106B, the temperature data having been detected by the bandgap temperature sensor 163 (Step S22). The temperature data obtained is output to each of the heater control unit 23 and the fan control unit 24.

With reference back to FIG. 3 again, the control unit 12 determines whether or not the temperature data obtained is equal to or less than a predetermined first temperature t1 (Step S11). More specifically, the control unit 12 determines, by means of the heater control unit 23, whether or not the temperature data obtained is equal to or less than the predetermined first temperature t1. In this determination, in a case where the temperature data obtained is not equal to or less than the predetermined first temperature t1 (Step S11; No), the control unit 12 advances processing to Step S13.

On the contrary, in a case where the temperature data obtained is equal to or less than the predetermined first temperature (Step S11; Yes), the control unit 12 performs, by means of the heater control unit 23, control to turn on (cause operation of) the heater 161 (Step S12). In a case where the heater 161 has been turned on already, processing is advanced to Step S13 with that state being maintained. This control actuates the heater 161 and the third display element 106B is thus heated uniformly, via the heat sink 160, to the temperature adequate for the operation. Therefore, the temperature of the third display element 106B is able to be heated to the temperature adequate for the operation immediately even at the start of use of the projection display device 100, for example, and generation of fringes at the start of use is able to be minimized quickly.

Subsequently, the control unit 12 determines whether or not the temperature data obtained has reached a second temperature t2 that has been set higher than the first temperature t1 (Step S13). More specifically, the control unit 12 determines, by means of the heater control unit 23, whether or not the temperature data obtained has reached the second temperature t2 that has been set higher than the first temperature t1. In a case where the temperature data obtained has not reached the second temperature t2 (Step S13; No) upon this determination, the control unit 12 returns processing to Step S10.

On the contrary, in a case where the temperature data obtained has reached the second temperature t2 (Step S13; Yes), the control unit 12 performs, by means of the heater control unit 23, control to turn off (stop) the heater 161 (Step S14). Furthermore, the control unit 12 performs, by means of the fan control unit 24, control to cause the fan 164 to operate (Step S15) and ends processing. By this control, the temperature of the third display element 106B is able to be prevented from rising excessively, and as illustrated in FIG. 5, the element temperature of the third display element 106B is able to be held nearly at the second temperature t2. Therefore, the projection display device 100 is capable of displaying a stable image with minimized fringes.

As described above, the projection display device 100 according to the embodiment includes: the light source 101 that emits light in the blue wavelength range; the first display element 106R, the second display element 106G, and the third display element 106B that are respectively arranged correspondingly to red, green, and blue and generate image light corresponding to each color; the heater 161 arranged, via the heat sink 160, on at least the back surface of the third display element 106B corresponding to blue; and the temperature sensor 162 provided on the heat sink 160; the light source 101 has the group of plural blue laser light sources having different oscillation wavelengths; and the projection display device 100 includes the heater control unit 23 that causes the heater 161 to operate in a case where a temperature detected by the temperature sensor 162 is lower than the predetermined first temperature t1. This configuration enables the third display element 106B to be heated to an adequate temperature in a state where the temperature distribution of the third display element 106B has been reduced, enables different fringe states to be superposed on one another by having the plural oscillation wavelengths for the lasers, and the fringes are thus able to be reduced. The time period taken to enable the projection display device 100 to be used is thereby able to be shortened and the projection display device 100 is thus able to display a stable image with minimized fringes.

The light source 101 in the projection display device 100 according to the embodiment includes the first blue laser light source 101α, the second blue laser light source 101β, and the third blue laser light source 101γ in the group of three having different oscillation wavelengths. According to this configuration, intervals between the fringes and positions of the peaks and bottoms are changed due to the differences between the oscillation wavelengths and fringes in a blue image are thus particularly reduced.

Furthermore, the plural oscillation wavelengths of the group in the projection display device 100 according to the embodiment are different from each other by at least 10 nm. This configuration enables effective minimization of generation of fringes.

Furthermore, the third display element 106B having the heater 161 arranged thereon in the projection display device 100 according to the embodiment includes the bandgap temperature sensor 163, and the heater control unit 23 uses detection data from the temperature sensor 162 when power is not being supplied to the third display element 106B and uses detection data from the bandgap temperature sensor 163 instead of the temperature sensor 162 after power has been supplied to the third display element 106B. This configuration enables the detection data to be used, the detection data resulting from direct and accurate measurement of the temperature of the third display element 106B.

Furthermore, the heater control unit 23 in the projection display device 100 according to the embodiment stops operation of the heater 161 in response to a temperature reaching the second temperature t2 that has been set higher than the first temperature t1, the temperature being detected by the temperature sensor 162 or the bandgap temperature sensor 163. Therefore, the temperature of the third display element 106B is able to be prevented from rising excessively and the element temperature of the third display element 106B is able to be held at a nearly constant temperature.

The embodiment has been described above, but embodiments are not to be limited by this embodiment. Furthermore, the components described above include those easily predicted by persons skilled in the art, those that are substantially the same, and those of so-called equivalent scope. Furthermore, the above described components may be combined as appropriate. Furthermore, without departing from the gist of the embodiment described above, various omissions, substitutions, or modifications of the components may be made.

### Industrial Applicability

A projection display device according to an embodiment is able to be used for, for example, a projection display device that uses a reflective liquid crystal display element.

### Reference Signs List

10 DISPLAY MECHANISM
12 CONTROL UNIT
21 FIRST TEMPERATURE OBTAINMENT UNIT
22 SECOND TEMPERATURE OBTAINMENT UNIT
23 HEATER CONTROL UNIT
24 FAN CONTROL UNIT
100 PROJECTION DISPLAY DEVICE
101 LIGHT SOURCE
101α FIRST BLUE LASER LIGHT SOURCE
101β SECOND BLUE LASER LIGHT SOURCE
101γ THIRD BLUE LASER LIGHT SOURCE
106R FIRST DISPLAY ELEMENT (LIQUID CRYSTAL DISPLAY ELEMENT CORRESPONDING TO RED)
106G SECOND DISPLAY ELEMENT (LIQUID CRYSTAL DISPLAY ELEMENT CORRESPONDING TO GREEN)
106B THIRD DISPLAY ELEMENT (LIQUID CRYSTAL DISPLAY ELEMENT CORRESPONDING TO BLUE)
160 HEAT SINK
161 HEATER (HEATING UNIT)
162 TEMPERATURE SENSOR (FIRST TEMPERATURE SENSOR)
163 TEMPERATURE SENSOR (SECOND TEMPERATURE SENSOR)
164 FAN
t1 FIRST TEMPERATURE
t2 SECOND TEMPERATURE

## Claims

1. A projection display device, including:
a light source that emits light in a blue wavelength range;
liquid crystal display elements that are respectively arranged correspondingly to red, green, and blue, and generate image light corresponding to each color;
a heating unit arranged, via a heat sink, on at least a back surface of the liquid crystal display element corresponding to blue; and
a first temperature sensor provided on the heat sink, wherein
the light source has a group of plural blue lasers having different oscillation wavelengths, and
the projection display device includes a heater control unit that causes the heating unit to operate in a case where a temperature detected by the first temperature sensor is lower than a predetermined first temperature.

2. The projection display device according to claim **1,** wherein the light source includes a group of three blue lasers having different oscillation wavelengths.

3. The projection display device according to claim 1 or **2,** wherein the oscillation wavelengths of the group are different from each other by at least 10 **nm.**

4. The projection display device according to claim 1 or **2,** wherein
the liquid crystal display element having the heating unit arranged thereon includes a bandgap second temperature sensor, and
the heater control unit uses detection data from the first temperature sensor when power is not being supplied to the liquid crystal display element, and uses detection data from the second temperature sensor instead of the first temperature sensor after power has been supplied to the liquid crystal display element.

5. The projection display device according to claim 4, wherein the heater control unit stops operation of the heating unit in response to a temperature reaching a second temperature that has been set higher than the first temperature, the temperature being detected by the first temperature sensor or the second temperature sensor.
